# EUROPÄISCHE PATENTSCHRIFT

(11) **EP 3 495 750 B1**
(45) Veröffentlichungstag und Bekanntmachung des Hinweises auf die Patenterteilung: **31.08.2022**
(21) Anmeldenummer: 18210500.7
(22) Anmeldetag: 05.12.2018
(51) Int. Cl.: F24S 10/80, F24S 70/20, F24S 80/50, F24S 40/44, F24S 20/50

(54) **PERMEATIONS-SOLARKOLLEKTOR ZUM ERWÄRMEN VON GASEN**
PERMEATION SOLAR COLLECTOR FOR HEATING GAS
COLLECTEUR SOLAIRE À PERMÉATION PERMETTANT DE CHAUFFER DES GAZ

(30) Priorität: 06.12.2017 DE 202017107426 U
(43) Veröffentlichungstag der Anmeldung: 12.06.2019
(73) Patentinhaber: Häller, Hans-Jörg, 6252 Dagmersellen (CH)
(72) Erfinder: Häller, Hans-Jörg, 6252 Dagmersellen (CH)
(74) Vertreter: Ernicke, Moritz

(56) Entgegenhaltungen:
- WO-A1-2017/044911
- WO-A2-2010/103255
- WO-A2-2013/115832
- DE-A1- 3 238 943
- DE-U1-202014 100 751
- US-A- 4 219 011
- US-A1- 2012 313 569
- US-A1- 2015 090 315

## Beschreibung

Die Erfindung betrifft einen Solarkollektor, insbesondere einen Permeations-Solarkollektor mit den Merkmalen im Oberbegriff des Hauptanspruchs.

Gegenstand der vorliegenden Offenbarung sind ein Permeations-Solarkollektor zum Erwärmen von Gasen, dessen Bestandteile und deren Herstellung. Ein Permeations-Solarkollektor ist ein Solarkollektor, der auf dem Prinzip des flächigen Gasdurchtritts (Permeation) durch eine Wandung des Solarkollektors basiert. Die Wandung kann eine transparente Abdeckung, ein Absorber oder ein sonstiges flächiges Element sein, das einen der Strömungskanäle des Permeations-Solarkollektors begrenzt.

Soweit im Rahmen der vorliegenden Offenbarung eine "gasdurchlässige Wandung", ein "gasdurchlässiger Absorber" oder eine "gasdurchlässsige transparente Abdeckung" genannt ist, ist damit gemeint, dass eine flächige Permeation durch die Wandung, den Absorber oder die transparente Abdeckung ermöglicht ist. Der Begriff "gasdurchlässig" bedeutet somit "permeabel" oder "von einem Gas flächig durchströmbar".

"Permeation" im Sinne der vorliegenden Offenbarung ist das Durchtreten eines Gases durch eine Wandung. Eine "Permeationsströmung" ist eine Gasströmung, die einen flächigen Wandungsbereich eines Solarkollektors in der Querrichtung zur Wandungsoberfläche durchdringt. Die Permeation kann auf beliebige Weise ermöglicht werden. Bevorzugt wird Permeation ermöglicht, indem eine Wandung des Solarkollektors mit einer Perforation oder einer sonst geeigneten flächigen Verteilung von Poren oder Mikro-Öffnungen versehen wird. Im Betrieb des Solarkollektors wird eine Permeationsströmung erzeugt, indem ein Gas durch die Öffnungen in der Wandung gesaugt wird, bspw. mittels einer dafür vorgesehenen Saugvorrichtung, die im inneren Strömungskanal einen Unterdruck gegenüber der Außenatmosphäre erzeugt. Die Permeationsströmung ist eine gedrosselte Strömung, weil sie durch die Poren oder Mikro-Öffnungen in der Wandung stattfindet.

Im Rahmen der vorliegenden Offenbarung bezeichnet eine "gasdurchlässige Wandung" eines Solarkollektors also insbesondere eine Wandung, die in Mikro-Bereichen der Oberfläche einen Gasdurchtritt durch Permeation zulässt. Die Wandung ist bevorzugt in makroskopischer Betrachtung geschlossen. Eine gasdurchlässige Wandung gestattet es, dass ein Druckgefälle über der Wandung erzeugbar und (dynamisch) aufrechterhaltbar ist, wobei infolge des Druckgefälles die gedrosselte Permeationsströmung durch die Wandung stattfinden kann.

Aus DE 20 2014 100 751 A1 ist ein Permeations-Solarkollektor mit einem inneren Strömungskanal und einem äußeren Strömungskanal bekannt. Der innere Strömungskanal ist auf Einstrahlungsseite durch einen Absorber und auf der Rückseite durch einen Isolator begrenzt. Der Absorber besteht aus einer Folie, die einfallendes Sonnenlicht absorbiert und in Wärme umwandelt. Der innere Strömungskanal ist von dem äußeren Strömungskanal teilweise umgeben. Der Absorber ist gasdurchlässig ausgebildet, sodass eine beschränkte Gasströmung von dem äußeren Strömungskanal in den inneren Strömungskanal stattfinden kann. Der äußere Strömungskanal ist auf der Einstrahlungsseite durch eine transparente Abdeckung begrenzt, die ebenfalls gasdurchlässig ist, sodass Frischluft von außen her durch die transparente Abdeckung in den äußeren Strömungskanal eindringen kann.

US 4 219 011 offenbart einen verglasten Solarkollektor mit einer Array-Bauweise, bei dem hinter einer Schutzverglasung ein oder mehrere Kollektorpaneele fest angeordnet sind. Die Kollektorpaneele umfassen flach ausgerichtete und ebene Platten, die rückseitig durch eine Mehrzahl von Auswölbungen eines benachbarten Bleches abgestützt sind.

WO 2010/103255 A2 offenbart einen Solarkollektor zum Erwärmen von Flüssigkeiten, der zur statischen Anordnung auf einem Gebäude vorgesehen ist.

Aus DE 20 2014 100 751 U1 ist ein ebenfalls zur statischen Anordnung vorgesehener Solarkollektor bekannt. Er weist einen Absorber und eine transparente Abdeckung auf, die über quer zur Axialrichtung des Kollektors angeordnete Tragbögen gestützt sind.

DE 32 38 943 A1 offenbart einen Wärmetauscher für Solarkollektoren zum Übertragen von Wärmeenergie auf eine Flüssigkeit, die in einem Rohr des Wärmetauschers geführt ist.

Es ist Aufgabe der vorliegenden Erfindung, einen verbesserten Permeations-Solarkollektor aufzuzeigen, um eine allgemein verbesserte Konstruktion zu ermöglichen. Es ist weiterhin Aufgabe der vorliegenden Erfindung, ein mobiles Solarkollektor-System aufzuzeigen, das mindestens einen Permeations-Solarkollektor umfasst. Die Erfindung löst diese Aufgaben durch die Merkmale der eigenständigen Sachansprüche.

Die vorliegende Offenbarung umfasst verschiedene Aspekte zur Weiterbildung eines Permeations-Solarkollektors oder zur Weiterbildung eines Herstellungsverfahrens, die jeweils für sich allein oder in einer beliebigen Kombination nutzbar sind. Die Aspekte tragen für sich allein oder in Kombination zur Lösung der offenbarungsgemäßen Aufgabe bei. Sie ermöglichen insbesondere das Trocknen von Erntegut unter Verwendung der Energie des Sonnenlichts auf dem Feld, sodass bei einer höheren Ausgangsfeuchte als bisher mit der Ernte begonnen werden kann.

Gemäß der Erfindung ist ein Absorber für einen Permeations-Solarkollektor aus einer gasdurchlässigen und bevorzugt kalottierten Metallfolie gebildet und weist bevorzugt eine lichtabsorbierende Beschichtung auf.

Im Rahmen der vorliegenden Offenbarung wird davon ausgegangen, dass eine Folie eine Materialquerschnittsdicke von weniger als 0,3 Millimeter, insbesondere weniger als 0,2 oder 0,15 Millimeter aufweist. Demgegenüber weist ein Blech eine Materialquerschnittsdicke von mehr als 0,3 Millimeter auf, insbesondere mindestens 0,4 Millimeter oder 0,6 Millimeter oder darüber auf.

Eine Metallfolie kann leicht gereinigt und desinfiziert werden. Dies gilt insbesondere für Edelstahlfolien. Ferner siedeln sich auf einer Metallfolie, insbesondere einer Edelstahlfolie, im Vergleich zu anderen Materialien keine oder weniger Keime wie Bakterien oder Pilze an. Der Absorber gemäß der vorliegenden Offenbarung ist somit besser für einen hygienischen Betrieb geeignet und erfüllt wesentliche Hygiene-Vorschriften in der Nahrungsmittelproduktion, Landwirtschaft oder Lüftungstechnik. Ein durch den offenbarten Permeations-Solarkollektor erzeugter warmer Luftstrom kann somit direkt zum Trocken von Erntegut oder sonstigen Lebensmitteln verwendet werden, ohne gegen Hygiene-Auflagen zu verstoßen.

Beim Kalottieren wird eine Vielzahl von benachbarten Mikro-Sicken erzeugt. Die Größe (Durchmesser oder Tiefe) einer Mikro-Sicke ist bevorzugt kleiner als 1 Zentimeter, insbesondere kleiner oder gleich 3 Millimeter. Eine kalottierte Metallfolie weist somit eine Vielzahl von benachbarten Mikro-Sicken auf.

Durch die Kalottierung wird die wirksame Oberfläche des Absorbers stark erhöht. Somit wird auch die wirksame Wärmetauschfläche erhöht. Die wirksame Fläche für den Wärmetausch ist die Kontaktfläche zwischen dem Absorber und dem zu erwärmenden Gas, zu der insbesondere die gewölbten Flächenbereiche der Kalottierung bzw. der Mikro-Sicken und die Wandungen der Mikro-Perforation zählen. Die wirksame Fläche ist durch die Kalottierung im Vergleich zu einer ebenen Oberfläche stark vergrößert.

Eingestrahltes Licht wird in den Mikro-Sicken gesammelt und etwaig mehrfach zwischen den Sickenwandungen hin und her geworfen. Hierdurch kann ein Wirkungsgrad der Lichtabsorption und damit der Gaserwärmung in dem Permeations-Solarkollektor erheblich gesteigert werden.

Die Kalottierung bewirkt außerdem eine Versteifung der Metallfolie und damit des Absorbers. Der kalottierte Absorber ist im Vergleich zu vorbekannten Materialien wie Kunststofffolien oder Blechen weniger anfällig für Schwingungen. Durch die Formgebung und Dichte der Kalottierung kann die Schwingungsneigung des Absorbers gezielt beeinflusst werden. Die Kalottierung kann insbesondere derart gewählt sein, dass die Schwingungsneigung im Bereich der hörbaren Frequenzen reduziert ist. Auf diese Weise kann ein etwaig störendes Singen oder Rauschen des Absorbers unter Windlast verhindert werden.

Die lichtabsorbierende Beschichtung ist bevorzugt eine Chrom-Oxid Beschichtung. Es hat sich gezeigt, dass eine Chrom-Oxid Beschichtung auch nach dem Kalottieren oberflächendeckend aufgebracht werden kann und eine gute Haftung auf Metallfolien aufweist, ohne die absorbierende Wirkung zu beeinträchtigen. Daher ist eine Chrom-Oxid Beschichtung besonders gut für die Herstellung eines Absorbers gemäß der vorliegenden Offenbarung geeignet. Die Chrom-Oxid Beschichtung kann auch für einen Absorber verwendet werden, der aus einem Metallblech oder einem anderen Material gebildet ist. Alternativ kann eine andere lichtabsorbierende Beschichtung verwendet werden.

Die flächig verteilten Poren oder Mikro-Öffnungen, die eine flächige Gasdurchlässigkeit des Absorbers oder der transparenten Abdeckung oder einer rückwärtigen Gehäusewandung bewirken, können eine beliebige Ausbildung haben. Für den Absorber hat sich die Verwendung von flächig verteilten schlitzförmigen Mirko-Öffnungen als günstig herausgestellt. Schlitzförmige Öffnungen gestatten es, die schwingungsfähigen Bereiche des Absorbers gezielter in Länge und Breite einzustellen, sodass relativ frei die gewünschten Eigenschaften hinsichtlich der Längs- und Querstabilität sowie hinsichtlich der Resonanz einstellbar sind. Schlitzförmige Öffnungen können bei einem Absorber genutzt werden, der aus einer Metallfolie gebildet ist, und zwar unabhängig davon, ob er eine Kalottierung aufweist oder nicht. Flächig verteilte schlitzförmige Öffnungen sind auch bei einem Absorber günstig einsetzbar, der aus einem Metallblech gebildet ist.

Ein anderer Aspekt der Erfindung betrifft die stützende Befestigung eines Absorbers und/oder einer transparenten Abdeckung und/oder einer rückseitigen Gehäusewandung des Solarkollektors. Der Permeations-Solarkollektor umfasst erfindungsgemäß mindestens einen Firstträger, auf dem der Absorber auflegbar ist. Dieser Firstträger kann auch als Absorber-Firstträger bezeichnet sein. Alternativ oder zusätzlich umfasst der Solarkollektor mindestens einen (anderen/weiteren) Firstträger, auf dem die transparente Abdeckung auflegbar ist. Dieser Firstträger kann auch als Abdeckungs-Firstträger bezeichnet sein. Bevorzugt alternativ oder zusätzlich umfasst der Solarkollektor einen (nochmals anderen/weiteren) Firstträger, auf dem eine rückwärtige Gehäusewandung des Solarkollektors auflegbar ist. Dieser Firstträger kann auch als Rückwandungs-Firstträger bezeichnet sein. Mindestens einer und bevorzugt alle der vorgenannten Firstträger sind durch ein Rohr oder eine Stange gebildet.

Ein Firstträger ist mit anderen Worten ein im Wesentlichen zug- und drucksteifer, länglicher und starrer Körper. Ein Firstträger kann aus einem beliebigen steifen oder starren Material gebildet sein, insbesondere aus einem Metall oder einem Kunststoff. Besonders bevorzugt für den Einsatz unter besonderen Hygiene-Bedingungen wie bei der Ernte, ist die Verwendung mindestens eines Firstträgers aus Edelstahl oder mit einer Edelstahl-Außenkontur. Eine Edelstahl-Außenkontur kann bspw. durch eine Beschichtung gebildet sein. Alternativ kann ein Firstträger aus einem Kern und einer Ummantelung bestehen, wobei bevorzugt die Ummantelung aus Edelstahl gebildet ist. Eine besonders bevorzugte Variante sieht vor, dass der Kern aus einer Stange oder einem Rohr besteht, das im Wesentlichen aus einem Kunststoff oder einem unedlen Metall gebildet ist. Die Ummantelung kann ein- oder mehrteilig gebildet sein und bspw. eine dünnwandige Hülse oder ein dünnwandiges Rohr umfassen, das bevorzugt aus Edelstahl gebildet ist.

Die ein oder mehreren Firstträger können auf beliebige Weise am Gestell / Gehäuse des Permeations-Solarkollektors befestigt sein. Eine bevorzugte Ausführung sieht vor, dass der Solarkollektor mindestens eine Vertikalstütze aufweist, an der ein oder mehrere Firstträger festlegbar sind. Die Vertikalstütze kann eine beliebige Ausbildung haben. Eine erste Ausführung sieht vor, dass eine Vertikalstütze die Form eines Kleiderbügels aufweist. Eine weitere Ausführung sieht vor, dass die Vertikalstützte eine Säulen- oder Stabform aufweist.

Die Verwendung eines oder mehrerer Firstträger als stützendes Auflageelement für den Absorber und/oder die transparente Abdeckung und/oder die rückwärtige Gehäusewandung hat verschiedene Vorteile. Einerseits kann ein Firstträger eine zusätzliche Versteifung des Gestells oder Gehäuses bewirken, sodass der Permeations-Solarkollektor besser für den mobilen Einsatz geeignet ist, insbesondere auf dem Feld. Durch die Versteifung können außerdem für die anderen Gestellteile des Solarkollektors leichtere Bauteile verwendet werden, insbesondere kleinere und/oder dünnere Profile.

Durch die Verwendung von Firstträgern kann das Gesamtgewicht des Solarkollektor-Gestells reduziert werden, und zwar bei ebenbürtiger oder noch erhöhter Stabilität. Der Firstträger kann selbst als längliche Profilstange ausgebildet sein, insbesondere als Rohr, was eine besonders kostengünstige und leichte Variante darstellt.

Gemäß einem weiteren Aspekt ist die transparente Abdeckung des Permeations-Solarkollektors durch eine für UV-Licht durchlässige Folie, insbesondere eine ETFE-Folie gebildet. Bisher bekannte Materialien für eine gasdurchlässige transparente Abdeckung eines Permeations-Solarkollektors weisen ein ungünstiges wellenlängenabhängiges Absorptionsprofil auf, weil UV-Strahlung von der Abdeckung weitgehend reflektiert oder absorbiert wird. Dies gilt beispielsweise für die meisten Glas-Werkstoffe und den überwiegenden Teil der Kunststoff-Folien. Die Folie gemäß der vorliegenden Offenbarung, insbesondere eine ETFE-Folie, lässt UV-Strahlung von der Einstrahlungsseite zur Innenseite des Solarkollektors durch, sodass diese im Wesentlichen ungehindert auf den Absorber treffen kann. Ein wesentlicher Anteil der Strahlungsenergie des Sonnenlichts liegt im Bereich der UV-Strahlung. UV-Strahlung hat eine desinfizierende Wirkung und kann die Bildung von Keimen wie Bakterien oder Pilzen im äußeren Strömungskanal hemmen oder vermeiden. Somit begünstigt die für UV-Licht durchlässige Folie auch die Verwendung eines Permeations-Solarkollektors im Bereich der Lebensmittelproduktion mit der Bedingung eines hygienischen Betriebs.

Besonders vorteilhaft für eine hohe Energieausbeute ist die Kombination einer transparenten Abdeckung, die für UV-Licht durchlässig ist (insbesondere aus einer ETFE-Folie) mit einem metallischen Absorber (Folie oder Blech). Denn die durch die transparente Abdeckung eintretende Energie, die aus UV-Wellenlängenbereichen des Lichts stammt, kann beim Auftreten auf eine Metalloberfläche zu erheblichen Anteilen absorbiert und somit nutzbar gemacht werden. Dieser Effekt kann noch erhöht werden, wenn der aus einem Metall gebildete Absorber mit einer lichtabsorbierenden Beschichtung versehen ist.

Die in den äußeren Strömungskanal einfallende UV-Strahlung wird vom Absorber aufgenommen und führt zu einer Erwärmung des Gases. Darüber hinaus werden auch die sonstigen Strahlungsbereiche vom Absorber aufgenommen, dazu gehören beispielsweise das sichtbare Lichtspektrum und Wärmestrahlung.

Es kann vorkommen, dass vom Absorber Wärmestrahlung emittiert wird. Die im Rahmen der vorliegenden Offenbarung für die transparente Abdeckung vorgesehene Folie (insbesondere ETFE-Folie) ist bevorzugt im Wesentlichen undurchlässig für Wärmestrahlung. Somit wird der Anteil an Wärmestrahlung reduziert, der zur Außenatmosphäre hin entweicht und es kann ein besonders hoher Anteil der eingebrachten Strahlungsenergie für die Gaserwärmung genutzt werden.

Die lichtabsorbierende Beschichtung des Absorbers ist bevorzugt selektiv, d.h. sie absorbiert das sichtbare Licht und UV-Licht bei einem hohen Wirkungsgrad, weist aber im Bereich der Wärmestrahlung einen geringen Emissionsgrad auf. Mit anderen Worten emittiert der Absorber infolge der selektiven lichtabsorbierenden Beschichtung keine Wärmestrahlung oder nur einen sehr geringen Anteil der aufgenommenen Leistung im Bereich der Wärmestrahlung. Somit werden Energieverluste durch WärmeAbstrahlung minimiert.

Gemäß einem weiteren Aspekt ist der innere Strömungskanal des Permeations-Solarkollektors auf der Rückseite (von Einstrahlungsseite weg weisende Seite oder Seite gegenüber Absorber) durch eine gasdurchlässige Gehäusewandung begrenzt, insbesondere durch eine perforierte Metallfolie oder ein perforiertes Blech bzw. eine Metallfolie oder ein Blech mit in sonstiger Weise geeigneten Mikro-Öffnungen. Hierdurch kann eine in den inneren Strömungskanal eingetretene Flüssigkeit wieder entweichen. Eine solche Flüssigkeit kann beispielsweise Regenwasser oder ein Reinigungsfluid sein. Alternativ oder zusätzlich können Ablauf-Strukturen für den Ablauf einer Flüssigkeit vorgesehen sein, die sich auch an anderer Stelle befinden können. Solche Ablaufstrukturen können beispielsweise Ablaufkanäle sein.

An der Rückseite des inneren Strömungskanals kann es zu Wärmeverlusten kommen, welche die Gaserwärmung etwaig beeinträchtigen. Ein wesentlicher Anteil der Wärmeverluste beruht auf einem konvektiven Wärmeübergang auf Gasschichten, die sich an der Rückseite des Permeations-Solarkollektors außerhalb des inneren Strömungskanals befinden. Bisher wurden Isolierungen genutzt, um den konvektiven Wärmeübergang zu begrenzen. Isolierungen sind häufig teuer, führen zu einer Erhöhung des Gewichts des Solarkollektors und bestehen etwaig aus Materialien, die für eine Verwendung im Bereich der Lebensmittelproduktion aus hygienischen Gründen oder aus Gründen des Brandschutzes ungünstig sind. Eine separate Isolierung kann auch nachteilig für den Betrieb sein, weil sich auf oder in dem Material der Isolierung unerwünschte Keime bilden können.

Eine gasdurchlässige rückseitige Gehäusewandung ermöglicht, dass ein Gasvolumen im Randbereich der rückseitigen Gehäusewandung, das etwaig durch konvektiven Wärmeübertrag erwärmt wird, in den inneren Strömungskanal eingesogen wird. Der überwiegende Anteil an Wärme, die durch die rückseitige Gehäusewandung austritt, wird also wieder in den Solarkollektor eingesogen, sodass die Wärmeverluste insgesamt begrenzt werden. Weiterhin kann die rückseitige Gehäusewandung mit besonders einfachen Mitteln gereinigt werden, was erneut den Einsatz des Permeations-Solarkollektors im Bereich der Lebensmittelproduktion und die Einhaltung strenger Hygiene-Anforderungen begünstigt.

Gemäß einem weiteren Aspekt weist ein Permeations-Solarkollektor mindestens eine Reinigungsvorrichtung auf. Die Reinigungsvorrichtung kann im inneren und/oder im äußeren Strömungskanal wirken. Die Reinigungsvorrichtung ist bevorzugt dazu ausgebildet, ein Reinigungsmittel oder Desinfektionsmittel abzugeben. Sie kann eine oder mehrere Düsen umfassen, die ein desinfizierendes Fluid abgeben, bspw. eine gasförmige, flüssige oder vernebelte Desinfektions-Flüssigkeit, um Keime abzutöten und/oder Ablagerungen zu entfernen. Eine Desinfektions-Vorrichtung kann alternativ oder zusätzlich eine UV-Lichtquelle umfassen, um Keime abzutöten.

Erfindungsgemäß weist der Solarkollektor ein Fahrgestell auf. Durch das Fahrgestell kann der Permeations-Solarkollektor mobil eingesetzt und bspw. zur Ernte aufs Feld mitgenommen werden. In einem mobilen Solarkollektor-System gemäß der vorliegen Offenbarung können ein- oder mehrere weitere Permeations-Solarkollektoren vorgesehen sein, die beweglich und bevorzugt schwenkbar mit dem Fahrgestell oder dem ersten Permeations-Solarkollektor verbunden sind.

Die Offenbarung umfasst ein Herstellungsverfahren für einen Absorber. Das Verfahren umfasst zumindest die folgenden Schritte: Einbringen einer Kalottierung in eine Metallfolie, bevorzugt indem die Metallfolie durch zwei korrespondierende Prägewalzen gefördert wird. Aufbringen einer lichtabsorbierenden Beschichtung auf zumindest eine Seite der kalottierten Metallfolie.

Die Metallfolie kann vor dem Kalottieren als Rohling zugeschnitten sein. Die Kalottierung kann bevorzugt Randbereiche des Rohlings aussparen. Alternativ kann der Rohling vollflächig kalottiert werden.

In einem weiteren Schritt kann eine Mikroperforation in die Metallfolie eingebracht werden, insbesondere durch Prägen oder Stanzen. Bevorzugt wird die Metallfolie (vor oder nach dem Kalottieren) hierfür durch zwei korrespondierende Prägewalzen geführt.

Das Aufbringen der lichtabsorbierenden Beschichtung nach dem Kalottieren hat den Vorteil, dass eine vollflächige Bedeckung der (infolge der Kalottierung deutlich vergrößerten) Oberfläche ermöglicht wird.

Eine gasdurchlässige Struktur wird bevorzugt vor dem Kalottieren in die Metallfolie eingebracht, insbesondere durch Perforieren. Besonders bevorzugt wird eine Perforation durch Nadeln eingebracht. Alternativ kann eine Perforation während oder nach dem Kalottieren eingebracht werden.

Es hat sich als günstig herausgestellt, etwaige Randversteifungen oder Randfalze nach dem Kalottieren und vor dem Aufbringen einer lichtabsorbierenden Beschichtung an der Metallfolie und insbesondere an einem zugeschnittenen Rohling anzubringen. Randversteifungen oder Randfalze können eine Befestigung des Absorbers an umgebenden Gehäuseteilen des Solarkollektors belastbarer machen und eine Rissneigung der Metallfolie vermindern. Randversteifungen haben weiterhin einen positiven Einfluss auf die Transportierbarkeit sowie beim Spannen an oder mit einer Anode, weil sie den inneren kalottierten Bereich eines Rohlings rahmenartig umgeben und somit resistenter gegen unerwünschte Verformungen machen. Das Spannen mit einer Anode kann insbesondere beim elektrostatisch unterstützten Aufbringen der lichtabsorbierenden Beschichtung vorteilhaft sein.

Die Erfindung ist in den Zeichnungen beispielhaft und schematisch dargestellt. Es zeigen:
- Figur 1:: Eine teilweise aufgebrochene Schrägansicht eines Permeations-Solarkollektors gemäß der vorliegenden Offenbarung und eine vergrößerte Querschnittansicht eines Absorbers;
- Figur 2:: Eine Explosionsdarstellung eines Permeations-Solarkollektors mit einem optionalen Fahrgestell;
- Figur 3:: Eine Querschnittansicht eines Permeations-Solarkollektors in einer mobilen Solarkollektor-Vorrichtung mit einer Reinigungsvorrichtung;
- Figur 4:: Eine bevorzugte Befestigungsstruktur zur Fixierung einer transparenten Abdeckung am Gestell eines Solarkollektors;
- Figur 5:: Eine Seitenansicht eines Solarkollektors mit stirnseitigen Aufgleitflächen
- Figur 6:: Eine Schrägansicht eines Absorbers in einer alternativen Ausführungsform;
- Figur 7:: Eine Schrägansicht einer Vertikalstütze in einer bevorzugen Ausbildung;
- Figuren 8 und 9:: Eine bevorzugte Ausbildung eines Permeations-Solarkollektors in einer Schrägansicht und in einer teilweise geöffneten Schrägansicht.

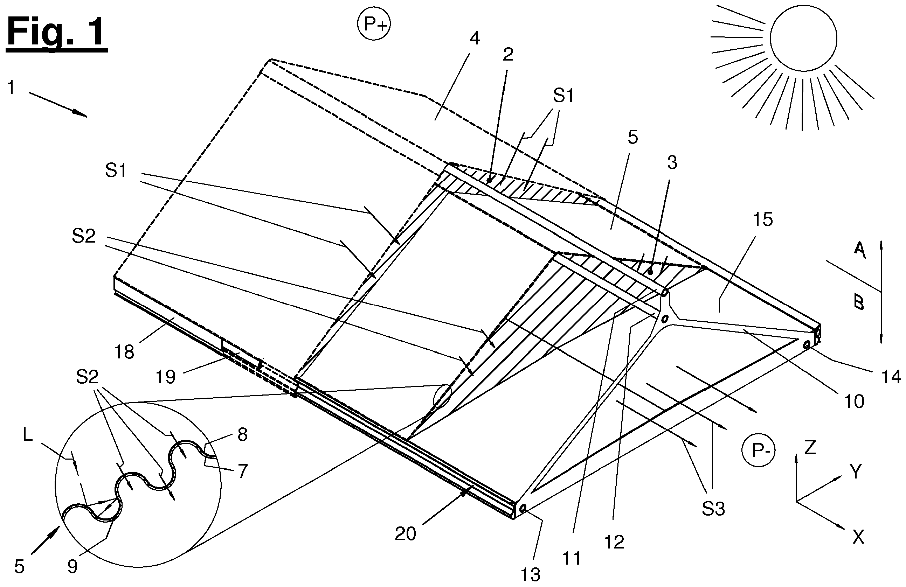

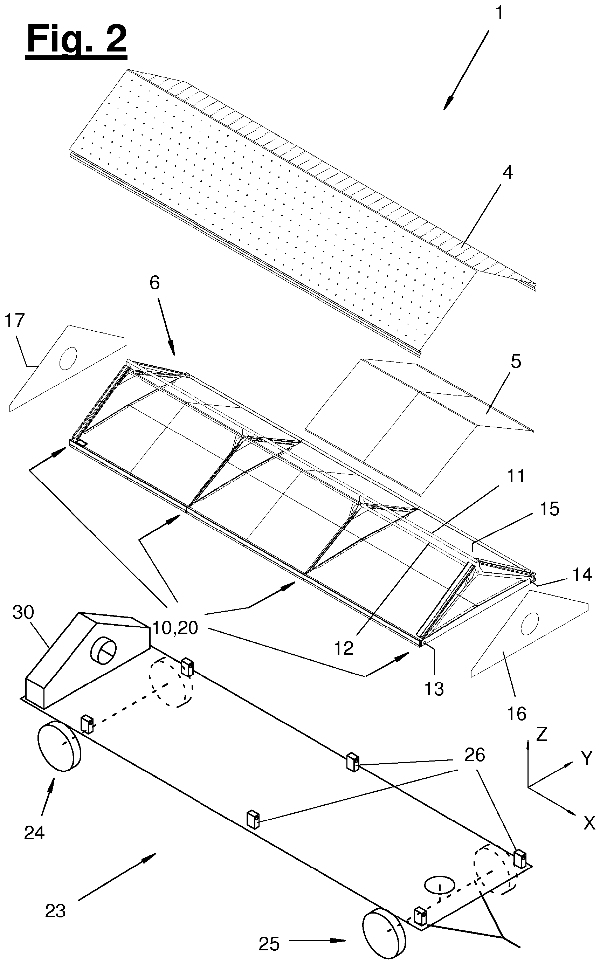

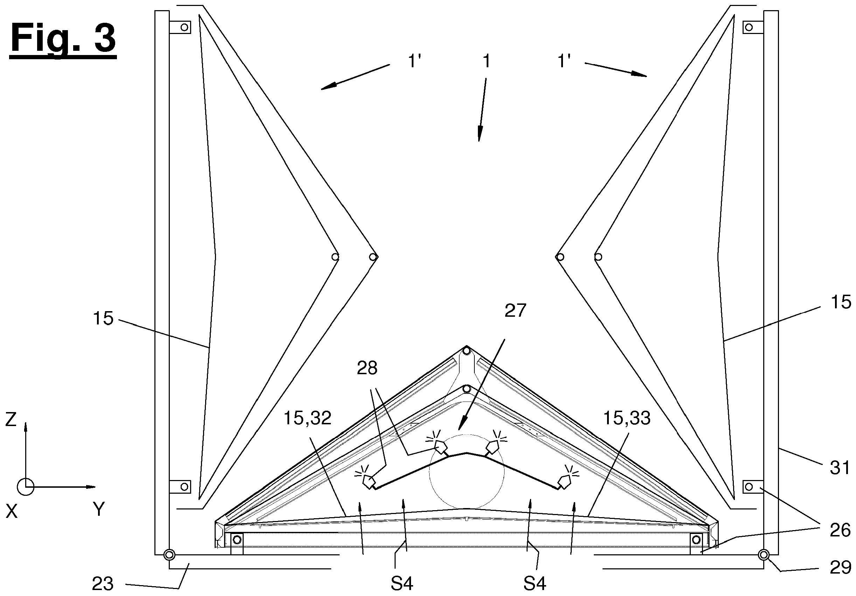

Die Offenbarung betrifft einen Absorber (5) für einen Permeations-Solarkollektor (1) sowie einen zugehörigen Permeations-Solarkollektor (1). Figur 1 zeigt den Permeations-Solarkollektor (1) gemäß der vorliegenden Offenbarung (nachfolgend auch verkürzt als Solarkollektor bezeichnet) in einer teilweise aufgebrochenen Schrägansicht. Weitere Darstellungen des Permeations-Solarkollektors (1, 1') finden sich in den Figuren 2, 3 8 und 9.

Der Solarkollektor (1) umfasst ein Gestell (6) mit einer Rahmenkonstruktion. Die in den Figuren dargestellte Rahmenkonstruktion stellt eine bevorzugte Ausführungsform dar. Alternativ kann der Solarkollektor gemäß der vorliegenden Offenbarung eine andere Form eines Gestells (6) oder eine sonstige Stützstruktur aufweisen.

Die für die Erwärmung eines Gases wirksamen Abschnitte des Solarkollektors (1) sind ein äußerer Strömungskanal (2) und ein innerer Strömungskanal (3). Der äußere Strömungskanal (2) kann auch als Erwärmungskanal bezeichnet sein. Der innere Strömungskanal (3) kann auch als Sammelkanal bezeichnet sein.

Nachfolgend wird davon ausgegangen, dass der Solarkollektor (1) ein Gas unter Einwirkung von Sonnenlicht erwärmt. Alternativ kann eine andere Strahlungsquelle vorhanden sein. Der Solarkollektor (1) wird für den Betrieb bevorzugt derart positioniert, dass die Einstrahlung auf den äußeren Strömungskanal (2) gerichtet wird, welcher nach außen hin durch eine transparente Abdeckung (4) begrenzt ist. Die Seite des Solarkollektors (1), die im Betrieb von der Strahlungsquelle abgewandt ist, wird nachfolgend als Rückseite (B) bezeichnet.

Der Solarkollektor (1) hat bevorzugt eine Längsachse (X) und ist entlang dieser Längsachse (X) im Wesentlichen einheitlich geformt, insbesondere mit im Wesentlichen gleichen Querschnittsformen entlang der Längsachse (X). Alternativ kann der Solarkollektor (1) eine andere Form haben.

In dem Beispiel von Figur 1 ist eine flächige rückseitige Wandung (15) an dem Gestell (6) angeordnet, die sich einerseits in Richtung der Längsachse (X) und andererseits in einer Querrichtung (Y) dazu erstreckt. Die rückseitige Wandung (15) kann aus einem oder mehreren Wandungselementen zusammengesetzt sein oder durch ein einziges Wandungselement gebildet sein. Bevorzugt weist der Solarkollektor (1) in Richtung der Längsachse (X) mehrere Segmente auf, die bevorzugt untereinander gleich ausgebildet sind. Jedes dieser Segmente kann ein separates Gestellelement und eine separate rückseitige Wandung (15) aufweisen. Im Beispiel von Figur 1 ist für jedes Segment eine rückseitige Wandung (15) vorgesehen, die aus zwei in der Querrichtung (Y) nebeneinander angeordneten Wandungselementen gebildet ist. Die beiden Wandungselemente können ggf. eine oder mehrere schräg zur Längsachse (X) und/oder schräg zur Querachse (Y) verlaufende Flächenanteile haben oder insgesamt gegenüber mindestens einer der Achsen (X,Y) schräg gestellt sein.

Der Solarkollektor (1) umfasst bevorzugt mindestens eine Vertikalstütze (10), die einerseits mit dem Gestell (6) und andererseits mit mindestens einem Firstträger (11, 12) verbunden ist. Die Vertikalstütze (10) kann eine beliebige Form haben. Sie ist besonders bevorzugt kleiderbügelförmig ausgebildet. Eine weitere bevorzugte Ausführung einer Vertikalstütze (10') wird weiter unten erläutert.

Eine kleiderbügelförmige Vertikalstütze (10) hat einen unteren Querriegel, der sich in Richtung der Querachse (Y) zwischen zwei Außenkanten des Gestells (6) erstreckt. An den äußeren Enden des Querriegels sind zwei schräg zum Querriegel abstehende Schulterstreben angeordnet, die in einem Scheitelpunkt zusammenlaufen. Zwischen den Schulterstreben und dem Querriegel ist ein Durchtrittsraum freigehalten, durch den eine Kanal-Strömung (S3) des inneren Strömungskanals (3) geleitet werden kann.

Von dem Scheitelpunkt aus erstreckt sich eine Halsstrebe im Wesentlichen in einer Normalrichtung (Z) zur Grundebene (X, Y). Am Ende der Halsstrebe ist ein Befestigungsabschnitt für einen ersten Firstträger (11) vorgesehen, der bevorzugt durch ein Rohr oder eine Stange gebildet ist. Am Scheitelpunkt ist bevorzugt eine Befestigungsstelle für einen zweiten Firstträger (12) vorgesehen, der ebenfalls bevorzugt durch ein Rohr oder eine Stange gebildet ist.

Die Firstträger (11, 12, 35) erstrecken sich im Wesentlichen in der Längsrichtung (X) über zumindest ein Segment des Solarkollektors (1) und bevorzugt über zwei, drei oder mehr Segmente und insbesondere den gesamten Solarkollektor (1). Der erste Firstträger (11) dient bevorzugt als Stütze für eine von außen auflegbare transparente Abdeckung (4). Der zweite Firstträger (12) dient bevorzugt als Stütze für einen auflegbaren Absorber (5, 5).

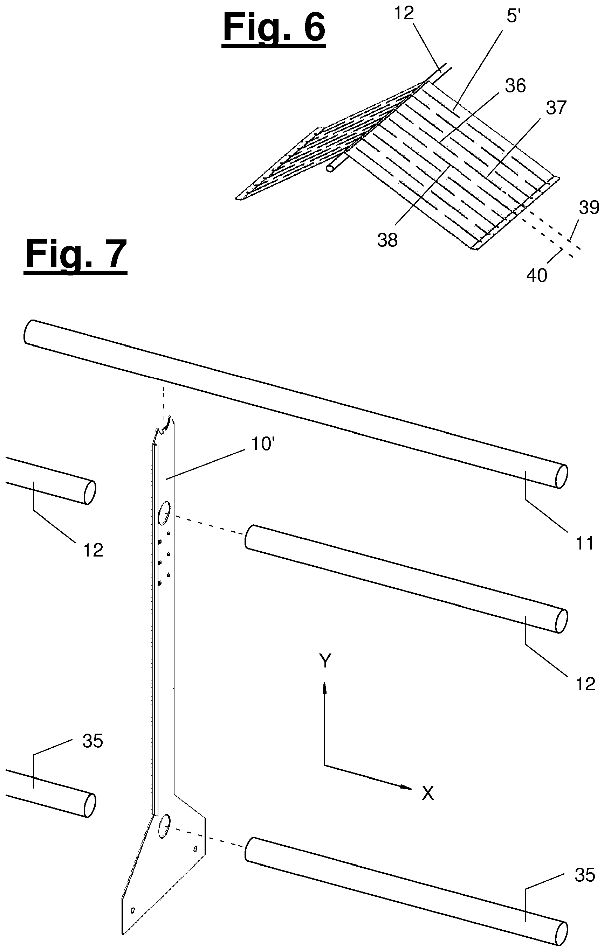

Der Absorber (5) ist gemäß dem ersten Aspekt der vorliegenden Offenbarung aus einer gasdurchlässigen und kalottierten Metallfolie (7) gebildet und weist eine lichtabsorbierende Beschichtung (8) auf. Die Metallfolie (7) kann insbesondere eine Edelstahlfolie sein, d.h. eine Folie aus einem rostfreien Stahl. Der Absorber (5') kann alternativ eine beliebige andere Ausbildung haben. Eine Möglichkeit für eine alternative Ausführung eines Absorbers (5') ist in Figuren 6, 8 und 9 dargestellt und wird weiter unten erläutert.

Links unten in Figur 1 ist eine vergrößerte Schnittansicht des Absorbers (5) mit einer Kalottierung gemäß dem ersten Aspekt dargestellt. Die Metallfolie (7) weist eine Mehrzahl von benachbarten Mikro-Sicken auf, welche gemeinsam die Kalottierung bilden. Die Mikro-Sicken können direkt benachbart sein oder alternativ zueinander leicht beabstandet sein. In dem Beispiel von Figur 1 sind sowohl erste Mikro-Sicken vorgesehen, deren Scheitel sich zur Einstrahlungsseite (A) erstrecken, als auch zweite Mikro-Sicken, deren Scheitel sich zur Innenseite, d.h. zum inneren Strömungskanal (3) hin erstrecken. Alternativ kann nur die erste Form der Mikro-Sicken oder die zweite Form der Mikro-Sicken genutzt werden, wobei die zweite Form bevorzugt ist.

In dem Beispiel von Figur 1 ist die Gasdurchlässigkeit des Absorbers (5) dadurch gebildet, dass der Absorber (5) eine Perforation aufweist. Die Perforation ist durch eine Vielzahl von Mikro-Öffnungen (9) gebildet. Die Mikro-Öffnungen (9) können eine beliebige absolute Anordnung an dem Absorber (5) und weiterhin eine beliebige relative Anordnung gegenüber den Mikro-Sicken haben. Besonders bevorzugt sind zumindest einige der Mikro-Öffnungen (9) an Scheitelpunkten der Mikro-Sicken angeordnet, insbesondere an den zur Innenseite, d.h. zum inneren Strömungskanal (3) hin gerichteten Scheitelpunkten.

Zumindest auf der zur Einstrahlungsseite (A) hin gerichteten Oberfläche der Metallfolie (7) ist eine lichtabsorbierende Beschichtung (8) vorgesehen, insbesondere eine Chrom-Oxidbeschichtung. In der Darstellung links unten in Figur 1 ist erläutert, wie ein schräg einfallender Lichtstrahl (11) infolge der schrägstehenden Wandungen der Mikro-Sicken durch ggf. mehrfache Reflektion wiederholt auf die Oberfläche des Absorbers (5) und insbesondere die lichtabsorbierende Beschichtung (8) trifft. Durch die mehrfache Reflektion wird die Strahlungsabsorption erhöht, so dass insbesondere in den Talbereichen der Mikro-Sicken eine besonders wirksame Gaserwärmung stattfindet. Wenn die Mikro-Öffnungen (9) im Bereich der Talabschnitte angeordnet sind, wird selektiv die besonders stark erwärmte Gasschicht aus dem Talbereich der Mikro-Sicken in Richtung des inneren Strömungskanals (3) durch die zweite Permeations-Strömung (S2) eingesaugt.

Der Absorber (5, 5') ist bevorzugt dachförmig an dem Gestell (6) und ggf. dem zweiten Firstträger (12) befestigt, insbesondere in der Form eines Satteldachs. Zwei parallel zur Längsrichtung X verlaufende Randbereiche des Absorbers (5, 5') sind bevorzugt fest mit den Längsseiten des Gestells (6) verbunden. Besonders bevorzugt können die in der Längsrichtung (X) verlaufenden Randbereiche des Absorbers (5, 5') zusammen mit den in der Längsrichtung (X) verlaufenden Randbereichen der rückseitigen Wandung (15) an dem Gestell (6) befestigt sein.

Der Absorber (5, 5') kann ggf. in sich steif und sich selbst tragend ausgebildet sein. Eine solche Ausbildung ist sowohl bei der Verwendung einer Metallfolie als auch eines Metallblechs möglich. Die in sich steife Ausbildung kann insbesondere dadurch erreicht werden, dass im Bereich der Dachflächen des Absorbers (5) eine oder mehrere Stützstrukturen eingeformt sind, insbesondere in der Form von Makro-Sicken. Alternativ oder zusätzlich können Randversteifungen an den im Wesentlichen quer zur Längsachse (X) verlaufenden Seiten des Absorbers (5) vorgesehen sein. Die Randversteifungen können insbesondere durch ein oder mehrfaches Umfalzen der Kanten der Metallfolie oder des Blechs erzeugt werden. Bevorzugt werden solche Randfalze an der Metallfolie (7) vor der Aufbringung der lichtabsorbierenden Beschichtung (8) und etwaig auch vor der Kalottierung eingebracht. Wenn die Kalottierung durch Prägewalzen erzeugt wird, sind ggf. Aussparungen an den Rändern der Prägewalzen vorzusehen, die einen Freiraum für die Randfalze lassen. Besonders bevorzugt können weiterhin die Prägewalzen in einem gemeinsamen Arbeitsschritt mit der Einbringung der Kalottierung die Mikro-Öffnungen zur Erzeugung der Gasdurchlässigkeit in die Metallfolie (7) einbringen.

In dem Beispiel von Figur 1 weist der innere Strömungskanal (4) eine im Wesentlichen dreieckige Querschnittsform auf, deren Grundseite durch die rückseitige Wandung (15) und deren Dreiecksschenkel durch die Dachflächen des Absorbers (5) vorgegeben sind. Weiter zur Einstrahlungsseite (1) hin ist der äußere Strömungskanal (2) angeordnet, der nach innen hin durch die Dachflächen des Absorbers (5) und nach außen hin, d.h. zur Einstrahlungsseite (A) hin, durch die Dachflächen einer transparenten Abdeckung (4) begrenzt ist.

Die transparente Abdeckung (4) ist bevorzugt außenseitig auf den ersten Firstträger (11) aufgelegt und hierdurch gestützt. Die transparente Abdeckung (4) besteht bevorzugt aus einer dünnschichtigen und transparenten Kunststofffolie, insbesondere einer ETFE-Folie. In dem Beispiel von Figur 1 ist die transparente Abdeckung (4) aus zwei Folienbahnen gebildet, die sich jeweils in der Längsrichtung (X) erstrecken und im Scheitelpunkt, d.h. im Bereich der Auflage auf den ersten Firstträger (11) überlappen. Durch die Überlappung wird eine Materialdopplung im Bereich der Auflage geschaffen, wodurch die transparente Abdeckung (4) dort eine erhöhte mechanische Belastbarkeit aufweist. Bevorzugt sind in dem Überlappungsbereich zwei oder mehr im Wesentlichen parallele Verbindungsstellen, insbesondere Schweißnähte, vorgesehen, um die Folienbahnen mehrfach miteinander zu verbinden und weiterhin bevorzugt eine im Wesentlichen gasdichte Verbindung im Bereich der Auflagestelle vorzusehen. Hierdurch wird erreicht, dass auch bei einer evtl. Beschädigung der inneren Folienlage keine Makro-Öffnung erzeugt wird, die einen zu großen lokalen Gaseintritt bewirken würde. Vielmehr wird im Bereich der Überlappung die Gasdurchlässigkeit verringert oder aufgehoben, sodass eine erste Permeations-Strömung (S1) (nur) in den danebenliegenden Dachabschnitten der transparenten Abdeckung (4) stattfindet. Die Gasdurchlässigkeit der transparenten Abdeckung (4) ist bevorzugt durch eine Perforation erzeugt, d.h. durch eine Vielzahl von flächig verteilten Mikro-Öffnungen in der transparenten Abdeckung (4).

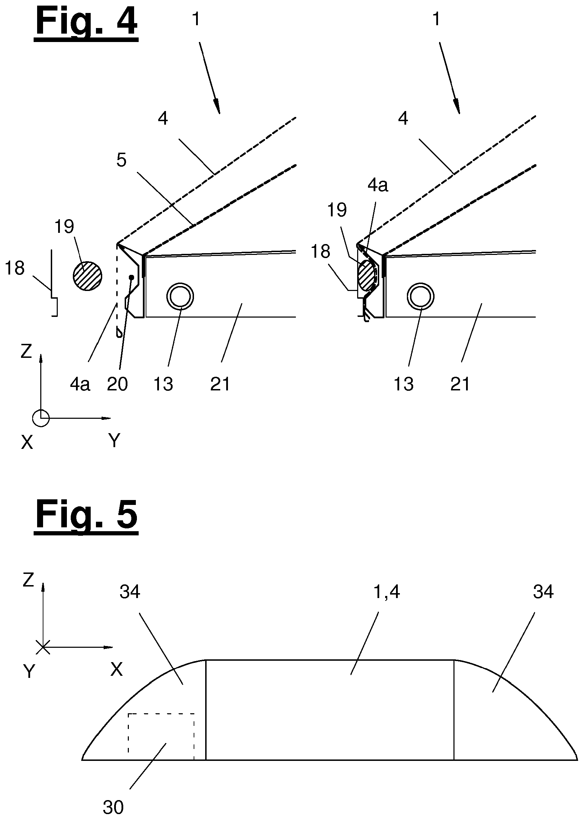

Die seitlichen Enden der transparenten Abdeckung (4), die sich im Wesentlichen entlang der Längsachse X erstrecken, sind bevorzugt durch Klemmung am Gestell (6) befestigt. Besonders bevorzugt sind an den in der Querrichtung Y nach außen weisenden Kanten des Gestells (6) Ausnehmungen in Form von Wannen (20) vorgesehen, in welche die transparente Abdeckung (4) einlegbar ist. Die transparente Abdeckung (4) ist bevorzugt durch ein kompressibles oder elastisches Element gespannt. Das kompressible oder elastische Element ist bevorzugt dazu ausgebildet, eine temperaturbedingte Längendehnung der transparenten Abdeckung aufzunehmen und/oder als Schwingungsdämpfer zu wirken, bspw. zur Schalldämpfung. In den Figuren ist das kompressible Element durch einen kompressiblen Wulst (19) gebildet, der einen Teil der transparenten Abdeckung (4) bogenförmig in einer Wanne (20) führt. Dies wird nachfolgend unter Bezugnahme auf Figur 4 weiter erläutert.

Figur 4 zeigt einen Randbereich des Gestells (6) des Solarkollektors (1) aus Figur 1 in vergrößerter Darstellung. Die Wanne (20) ist in dem gezeigten Beispiel durch eine profilierte Leiste gebildet, die sich entlang der Längsachse X erstreckt und außenseitig an dem Gestell (6), insbesondere an ein oder mehreren Querträgern (21) befestigt ist. An einer oberen Kante der Wanne (20) liegt die transparente Abdeckung (4) auf. Von dieser oberen Kante hängt bei der Montage ein seitlicher Endbereich (4a) der transparenten Abdeckung (4) nach unten und überdeckt den Innenraum der Wanne (20). Bei der Montage wird nun bevorzugt ein kompressibler Wulst (19) unter Mitnahme des seitlichen Endbereichs (4a) der transparenten Abdeckung (4) in die Wanne eingedrückt und mittels einer Seitenblende (18) verspannt. Die Seitenblende (18) kann an einem unteren Ende mit einem Seitenschenkel der Wanne (20) und/oder dem Gestell (6) verbunden werden, insbesondere durch mehrfache Klemmpunkte oder Streckenklemmung.

Der seitliche Endbereich (4a) der transparenten Abdeckung (4) ist somit in einer Bogenform zwischen der Wanne (20) und dem kompressiblen Wulst (19) geführt und zur Rückseite (B) hin klemmend fixiert. Durch die Kompressibilität des Wulstes (19) wird erreicht, dass die transparente Abdeckung (4) eine gewisse Beweglichkeit behält. Sie kann insbesondere im Bereich der oberen Kante der Wanne (20) in Richtung des Dachbereichs der transparenten Abdeckung (4) gezogen werden, wobei der Wulst (19) komprimiert wird, oder sich in der Gegenrichtung bewegen, wobei sich der Wulst (19) wieder ausdehnt. Durch den Grad der Kompressibilität des Wulstes (19) kann somit die Spannkraft vorgegeben werden, mit der die transparente Abdeckung (4) in den Dachbereichen über das Gestell (6) und den ersten Firstträger (11) gezogen ist.

Durch die vorgenannte Befestigungsstruktur wird erreicht, dass die transparente Abdeckung (4) im Wesentlichen durchhangfrei und gespannt befestigt werden kann und dennoch eine ausreichende Beweglichkeit bewahrt, um bei Niederschlag, Windeinfall, Hagelschlag oder sonstigen externen Einwirkungen lokal auszuweichen. Die transparente Abdeckung (4) kann bevorzugt im seitlichen Endbereich (4a) mehrlagig ausgebildet sein, insbesondere gedoppelt sein. Die mehrlagige Ausbildung ist insbesondere bevorzugt im Bereich der Kontaktierung der oberen Kante der Wanne (20) vorgesehen.

Beim Betrieb des Solarkollektors (1) wird bevorzugt im inneren Strömungskanal (3) ein Unterdruck (P-) gegenüber der Außenatmosphäre erzeugt. Dies ist beispielhaft in Figur 1 dargestellt. Infolge des Unterdrucks (P-) im inneren Strömungskanal wird ein zu erwärmendes Gas von der Außenatmosphäre her in einer ersten Permeations-Strömung (S1) durch die transparente Abdeckung (4) in den äußeren Strömungskanal (2) gesaugt. Dort wird das Gas insbesondere im Kontakt mit dem Absorber (5) und weiterhin insbesondere im Kontakt mit der infolge der Lichteinstrahlung (L) stark aufheizenden Beschichtung (8) erwärmt. Durch den Unterdruck (P-) wird das erwärmte Gas weiter von dem äußeren Strömungskanal (2) durch den Absorber (5) in einer zweiten Permeations-Strömung (S2) in den inneren Strömungskanal (3) gesaugt. Der Unterdruck (P-) kann auf beliebige Weise erzeugt werden. Bevorzugt ist eine Saugvorrichtung (30) vorgesehen, die beispielsweise an einer Stirnseite des Solarkollektors (1) anordenbar ist. Die Saugvorrichtung (30) kann Bestandteil des Solarkollektors (1) sein. Sie kann druckleitend über eine Öffnung in einer Stirnseite oder im Bodenbereich mit dem inneren Strömungskanal (3) verbunden sein.

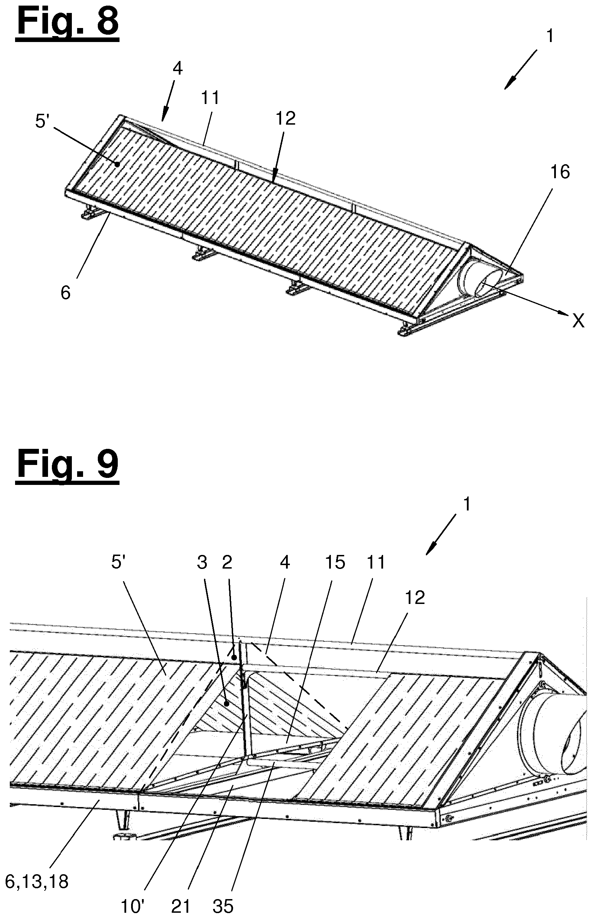

Figur 2 zeigt einen Permeations-Solarkollektor (1) gemäß der vorliegenden Offenbarung in einer Explosionsdarstellung. In dem Beispiel umfasst der Solarkollektor (1) insgesamt drei im Wesentlichen gleich ausgebildete Segmente, die in der Längsrichtung (X) hintereinander angeordnet sind. Alternativ kann eine andere Anzahl von Segmenten vorgesehen sein. Die Montage des Solarkollektors (1) kann bevorzugt in der folgenden Weise erfolgen. Zunächst wird eine erste Vertikalstütze (10) mit zwei Längsträgern (13, 14) verbunden, die bevorzugt jeweils durch ein Rohr oder eine Stange gebildet sind und sich weiterhin bevorzugt über zwei oder mehr Segmente des Solarkollektors (1) erstrecken. Etwaig kann im Bereich des Querriegels einer Vertikalstütze (10) ein zusätzlicher Querträger (21) angeordnet sein. Über den Querträger (21) können bevorzugt die seitlichen Wannen (20) sowie die Seitenblenden (18) befestigt werden. Wenn anstelle der in Figur 2 gezeigten kleiderbügelförmigen Vertikalstütze (10) eine säulenförmige Vertikalstütze (10') gemäß Figur 7 und 9 verwendet wird, kann eine abgewandelte Montage erfolgen. Die säulenförmige Vertikalstütze (10') kann an einem Querträger (21) befestigt werden. Der Querträger (21) kann dann mit den Längsträgern (13, 14) und etwaig mit den seitlichen Wannen (20) sowie den Seitenblenden verbunden werden.

An den kleiderbügelförmigen Vertikalstützen (10) sind bevorzugt im Bereich der Oberkante des Querriegels Auflagerungsflächen gebildet, die insbesondere durch Umfalzen der nach innen weisenden Kante des Querriegels gebildet sein können. Eine rückseitige Abdeckung (15) kann auf diese Auflageflächen an den Querriegeln aufgelegt werden und sich dort abstützen. Die sich im Wesentlichen parallel zur Längsrichtung (X) erstreckenden Längsseiten der rückseitigen Wandung (15) können als Befestigungsbasis für den Absorber (5) dienen.

Alternativ kann die Rückseite (15) ausschließlich an den in der Längsrichtung (X) verlaufenden Kanten mit dem Gestell (6) des Solarkollektors (1) verbunden sein. Aus Stabilitätsgründen ist es vorteilhaft, wenn die Rückseite (15) eine leichte Innenwölbung aufweist und/oder im Mittelbereich dachförmig abgewinkelt ist.

Bei den säulenförmigen Vertikalstützen (10') kann gemäß einer alternativen Montagevariante ein dritter Firstträger (35) befestigbar sein, auf den - anaolog zu den obigen Beispielen für den Absorber (5) und die transparente Abdeckung (4) - die rückwärtige Wandung (15) stützend auflegbar ist.

Bei der Montage können bevorzugt in der Längsrichtung (X) nach und nach jeweils eine rückseitige Wandung (15) und eine Vertikalstütze (10, 10') an den Längsträgern (13, 14) befestigt werden. Abschließend kann eine weitere Vertikalstütze (10) befestigt werden, die die zweite Stirnseite des Solarkollektors (1) bildet. Alternativ kann an den stirnseitigen Enden auf die Anbringung einer Vertikalstütze (10, 10') verzichtet werden und es können stattdessen im Wesentlichen geschlossene Stirnwandungen vorgesehen sein. Solche Stirnwandungen können im Wesentlichen geschlossen sein, d.h. die Stirnwandungen können die Stirnbereiche des inneren Strömungskanals (3) und/oder des äußere Strömungskanals (2) verschließen. Ferner können solche Stirnwandungen Aufnahmen für die Längsträger (13, 14) und/oder Firstträger (11, 12, 35) aufweisen. Ferner können ein oder mehrere Öffnungen für den Anschluss einer Saugvorrichtung vorgesehen sein.

Zwischen den Scheitelpunkten der Vertikalstützen (10, 10') kann der zweite Firstträger (12) angeordnet werden. Hierzu kann insbesondere ein Rohr durch entsprechende Öffnungen an den Scheitelpunkten eingeschoben werden, wobei sich das Rohr bevorzugt über die Gesamtlänge des Solarkollektors (1) oder zumindest über zwei oder mehr Segmente erstreckt. In der Darstellung von Figur 1 sind zusätzliche Abstützstreben zwischen dem zweiten Firstträger (12) und den Schulterstreben der Vertikalstützen (10) angeordnet, durch die der Solarkollektor (1) ausgesteift wird. Gemäß der beispielhaften Darstellung in Figur 7 kann ein Firstträger auch nur die Länge eines Segments aufweisen. Dies gilt insbesondere für den zweiten und dritten Firstträger (12, 35) bzw. den Absorber-Firstträger und den Rückwandungs-Firstträger.

An jedem Segment kann nun ein (ein- oder mehrteiliger) Absorber (5, 5') aufgelegt werden, der im Scheitelpunkt auf dem zweiten Firstträger (12) aufliegt und an den parallel zur Längsachse (X) verlaufenden Kanten bevorzugt mit den dazu parallelen Kanten der rückseitigen Wandung (15) verbindbar ist. In den Figuren sind pro Segment zwei in der Längsrichtung (X) zueinander benachbarte Absorberfolien oder Absorberbleche gezeigt. Diese können an der Kontaktstelle miteinander verbunden sein, einander überlappen oder zueinander leicht auf Abstand gesetzt sein. In gleicher Weise können ein- oder mehrteilige Absorber (5') aus Blech angeordnet werden.

Bevorzugt gleichzeitig mit der Befestigung eines Absorbers (5, 5') kann an den parallel zur Längsachse (X) verlaufenden Kanten der rückseitigen Wandung (15) jeweils eine der seitlichen Wannen (20) befestigt werden. Die quer zur Längsachse (X) verlaufenden Kanten des Absorbers (5, 5') können an den Schulterstreben der Vertikalstützen (10) aufliegen, beispielsweise an dort gebildeten Schulterfalzen. Alternativ können die quer zur Längsachse (X) verlaufende Kanten des Absorbers (5, 5') frei beweglich sein, sodass beispielsweise Verklemmungen oder Verformungen infolge einer Wärmedehnung verhindert werden.

Der erste Firstträger (11) wird bevorzugt von außen her auf entsprechende Aufnahmebereiche der Vertikalstützen (10) aufgesteckt. Anschließend kann die transparente Abdeckung (4) über den ersten Firstträger (11) gelegt werden, so dass die seitlichen Endbereiche (4a) in geeignete Position gegenüber den Wannen (20) gebracht werden. Die transparente Abdeckung (4) kann zunächst im Randbereich mittels Klemmleisten im Bereich der Wanne (20) fixiert werden. Anschließend erfolgt die Anbringung der kompressiblen Wülste (19) sowie der Seitenblenden (18) gemäß der obigen Erläuterung zu Figur 4. Alternativ kann eine andere Reihenfolge der Befestigungsschritte vorgesehen sein.

Der Solarkollektor (1) kann ggf. mehrfach in der Längsrichtung (X) hintereinander angeordnet werden, wobei insbesondere die inneren Strömungskanäle (3) von benachbarten Solarkollektoren (1) direkt untereinander verbindbar sind. Weiterhin können auch die äußeren Strömungskanäle (2) von benachbarten Solarkollektoren (1) direkt miteinander verbunden werden.

An den Stirnenden werden bevorzugt Stirnabdeckungen (16, 17) angebracht, welche die Enden der inneren und äußeren Strömungskanäle (2, 3) verschließen. Zumindest eine der Stirnabdeckungen (16, 17) weist bevorzugt eine Öffnung auf, an der eine Saugvorrichtung (30) anbindbar ist.

Der Solarkollektor (1) gemäß der vorliegenden Offenbarung ist bevorzugt als Komponente zur hygienischen Erzeugung einer Trocknungs- oder Heizluft für den Betrieb einer Lüftungs-, Trocknungs- oder Energieerzeugungsanlage einsetzbar. Der offenbarte Solarkollektor ist insbesondere dazu geeignet, eine Trocknungsluft oder Heizluft zu erzeugen, die in direkten Kontakt mit einem Lebensmittel, einem hygienischen Arbeitsraum oder einem Wohnraum gebracht werden kann. Beispielsweise kann der Solarkollektor (1) zur Trocknung von Getreide oder anderem Erntegut direkt auf dem Feld verwendet werden.

Erfindungsgemäß weist der Solarkollektor (1) ein Fahrgestell (23) auf oder ist mit einem solchen Fahrgestell (23) verbunden. Dies ist beispielhaft in Figuren 2 und 3 dargestellt.

Das Fahrgestell (23) kann eine beliebige Ausbildung haben. Bevorzugt weist es mindestens eine lenkbare Achse (25) und eine Fahrachse (24) auf. Alternativ oder zusätzlich können eine oder mehrere Einzelrollen vorgesehen sein, bspw. lenkfähige und starr geführte Einzelrollen. An dem Fahrgestell (23) ist bevorzugt eine Saugvorrichtung (30) angeordnet, die einen Unterdruck für mindestens einen Solarkollektor (1) erzeugt. Alternativ kann der Solarkollektor (1) mit einer externen Saugvorrichtung betrieben werden, die beispielsweise eigenständig befördert wird oder an einem Zugfahrzeug angeordnet ist. Die Befestigung des Solarkollektors (1) an dem Fahrgestell (23) kann besonders bevorzugt über Lagerböcke (16) erfolgen, die an den Längsträgern (13, 14) angreifen.

Figur 3 zeigt weitere bevorzugte Aspekte eines Solarkollektors (1) gemäß der vorliegenden Offenbarung sowie eine offenbarungsgemäße mobile Solarkollektor-Vorrichtung. Der in der Mitte von Figur 3 gezeigte Solarkollektor (1) umfasst eine Reinigungsvorrichtung (27). Die Reinigungsvorrichtung (27) ist innerhalb des inneren Strömungskanals (3) und/oder innerhalb des äußeren Strömungskanals (2) angeordnet. Sie kann eine beliebige Ausbildung haben.

Bevorzugt ist eine Reinigungsvorrichtung (27) dazu ausgebildet, ein Reinigungsmittel oder Desinfektionsmittel abzugeben. Die Abgabe erfolgt bevorzugt direkt in den inneren Strömungskanal (3) und/oder den äußeren Strömungskanal (2). Besonders bevorzugt weist die Reinigungsvorrichtung (27) eine oder mehrere Düsen (28) zur Abgabe des Reinigungsmittels auf. Als Reinigungsmittel können insbesondere Flüssigkeiten dienen, welche auf die Grenzflächen des inneren Strömungskanals (3) und/oder des äußeren Strömungskanals (2) aufgebracht werden, beispielsweise in Form eines Strahls, eines Schwalls oder als Sprühnebel.

Bevorzugt weist die rückseitige Wandung (15) des inneren Strömungskanals (3) mindestens eine gegenüber der Horizontalebene, insbesondere gegenüber der Längsachse (X) und/oder der Querachse (Y), geneigte Fläche (32, 33) auf. Die geneigte Fläche (32, 33) definiert eine Ablaufrichtung für eine im inneren Strömungskanal (3) eingebrachte Flüssigkeit. Besonders bevorzugt sind am Ablaufende der geneigten Flächen ein oder mehrere Flüssigkeitsauslässe vorgesehen. Die Flüssigkeitsauslässe können druckdicht verschließbar und ggf. nur zur Durchführung eines Reinigungsvorgangs öffenbar sein.

Für einen mobilen Betrieb ist es günstig, mehrere Solarkollektoren (1, 1') in einer mobilen Solarkollektor-Vorrichtung zu verbinden und gemeinsam zu transportieren und zu betreiben. Mit anderen Worten umfasst eine mobile Solarkollektor-Vorrichtung einen ersten Permeations-Solarkollektor (1) gemäß der vorliegenden Offenbarung, der bevorzugt ein Fahrgestell (23) oder mit einem Fahrgestell (23) verbunden ist. Darüber hinaus weist die mobile Solarkollektor-Vorrichtung mindestens einen weiteren Permeations-Solarkollektor (1') auf, der mit dem ersten Permeations-Solarkollektor (1) und/oder dem Fahrgestell (23) beweglich verbunden ist.

Die mehreren Solarkollektoren (1, 1') können insbesondere ein gemeinsames Traggerüst oder einen gemeinsamen Ständer haben. Weiterhin ist bevorzugt ein Solarkollektor über mindestens ein Gelenk (29) mit einem benachbarten Solarkollektor (1) verbunden. Das Gelenk ist bevorzugt derart ausgerichtet, dass es eine Schwenkbewegung der benachbarten Solarkollektoren um eine parallel zur Längsachse (X) verlaufende Schwenkachse ermöglicht. In dem Beispiel von Figur 3 ist der in der Mitte angeordnete Solarkollektor (1) über ein rechtes und ein linkes Gelenk (29) mit zwei weiteren Solarkollektoren (1') verbunden, die skizzenhaft dargestellt sind. Ein über ein Gelenk (29) angebundener Solarkollektor (1') ist derart schwenkbar, dass er zwischen einer aufrechten Lage zum Transport und einer Parallelausrichtung zu den benachbarten Solarkollektoren (1) für den Betrieb bewegbar ist.

Besonders bevorzugt können mindestens ein mittlerer Solarkollektor (1) und mindestens ein äußerer Solarkollektor (1') an einem gemeinsamen Fahrgestell (23) angeordnet sein. Der mindestens eine äußere Solarkollektor (1') ist bevorzugt mit dem Fahrgestell (23) über ein Schwenkgelenk verbunden oder in sonstiger Weise schwenkbar angeordnet. Die schwenkbare Anordnung ist bevorzugt derart gebildet, dass der schwenkbare Solarkollektor (1') zwischen einer Transportstellung mit im Wesentlichen vertikal ausgerichteter rückseitiger Wandung (15) und einer Einsatzstellung bzw. Betriebsstellung mit im Wesentlichen horizontal ausgerichteter rückseitiger Wandung (15) bewegbar ist.

Besonders bevorzugt sind an einem Fahrgestell ein mittlerer Solarkollektor (1) und ein linker und ein rechter schwenkbarer Solarkollektor (1') angeordnet, wie in Figur 3 im Querschnitt dargestellt.

Die rückseitige Wandung (15) eines Solarkollektors (1) kann gasdicht ausgebildet sein. Zur Verhinderung oder Verminderung von Wärmeverlusten kann weiterhin an der rückseitigen Wandung (15) eine Isolierung vorgesehen sein.

Alternativ kann die rückseitige Wandung (15) als eine gasdurchlässige Gehäusewandung ausgebildet sein, die insbesondere durch eine perforierte Platte oder ein perforiertes Blech gebildet ist. Auf diese Weise wird es möglich, dass bei einem Unterdruck (P-) im inneren Strömungskanal (3) auch eine rückseitige Zuströmung (S4) von Gas in den inneren Strömungskanal (3) stattfindet. Dies ist beispielhaft in Figur 3 dargestellt. Die Gasdurchlässigkeit der rückseitigen Wandung (15) ist bevorzugt geringer und zwar wesentlich geringer als die Gasdurchlässigkeit des Absorbers (5) und der transparenten Abdeckung (4), so dass die rückseitige Zuströmung (S4) ebenfalls geringer ist als die Permeations-Strömungen (S1, S2). Die Gasdurchlässigkeit der rückseitigen Wandung (15) kann insbesondere derart gewählt sein, dass ein Luftkissen am Innenbereich der rückseitigen Wandung (15) gebildet wird. Dieses Luftkissen kann als Isolierschicht wirken, die einen Wärmeverlust aus dem inneren Strömungskanal (3) zu der Rückseite (B) hin vermindert oder verhindert. Ggf. kann zusätzlich zu der Gasdurchlässigkeit der rückseitigen Wandung (15) eine rückseitige Isolierung vorgesehen sein, die ebenfalls gasdurchlässig ausgebildet sein kann.

Die transparente Abdeckung (4) des Solarkollektors (1) hat bevorzugt die Form eines Satteldachs. Dies ist beispielhaft in den Figuren 1 und 2 dargestellt. Alternativ kann die transparente Abdeckung (4) die Form eines Mansarddachs oder eines Tonnendachs aufweisen. Dann sind ggf. zwei oder mehr zusätzliche Firstträger zur Stützung der transparenten Abdeckung (4) vorzusehen, die bevorzugt an gemeinsamen Vertikalstützen (10) mit entsprechend geänderter Ausbildung befestigbar sind.

Gemäß der in Figur 5 gezeigten Ausführungsvariante kann ein Solarkollektor (1) bevorzugt an zumindest einer Stirnseite eine die Windeinwirkung reduzierende Aufgleitfläche (34) aufweisen. Eine solche Aufgleitfläche (34) kann auf beliebige Weise gebildet sein. Bevorzugt wird sie durch ein Formblech gebildet, das insbesondere an einer Stirnseite des Solarkollektors (1) befestigbar ist. Die Aufgleitfläche (34) kann besonders bevorzugt eine Saugvorrichtung (30) mitüberdecken. Wenn ein Solarkollektor (1) mit einem Fahrgestell (23) verbunden ist, ist eine die Windeinwirkung reduzierende Aufgleitfläche (34) bevorzugt zumindest an der in der Fahrtrichtung vorauseilenden Stirnseite angebracht. Die Aufgleitfläche (34) vermindert oder vermeidet lokale Unterdrücke während der Fahrt an der transparenten Abdeckung (4) im Nachbarbereich zu einer Stirnseite, so dass ein zerstörungsfreier Transport auch mit höheren Geschwindigkeiten ermöglicht wird.

Figur 6 zeigt eine weitere bevorzugte Ausführung eines Absorbers (5'), der Bestandteil eines Permeations-Solarkollektors (1, 1') gemäß der vorliegenden Offenbarung sein kann. In dem Beispiel von Figur 6 ist die Gasdurchlässigkeit des Absorbers (5) dadurch gebildet, dass der Absorber (5') eine Mehrzahl von flächig verteilten Mikro-Öffnungen (36, 37, 38) aufweist. Die Mikro-Öffnungen sind als Schlitze (36, 37, 38) oder schlitzförmig ausgebildet. Sie können beliebig angeordnet und verteilt sein. Die Schlitze (36, 37, 38) sind bevorzugt zueinander parallel und beispielsweise auf parallelen Linien (39, 40) angeordnet. Ferner sind bevorzugt einerseits mehrere Schlitze (36, 37) mit Abstand hintereinander angeordnet, bspw. auf einer fluchtenden Linie (39). Andererseits können mehrere Schlitze (36, 37, 38) nebeneinander angeordnet, beispielsweise auf parallelen Linien (39, 40). Die Schlitze (36, 37, 38) auf zwei benachbarten Linien (39, 40) sind bevorzugt zueinander entlang der Linienausrichtung versetzt.

Der Absorber (5') gemäß Figur 6 kann ebenfalls aus einer Metallfolie (7) gebildet sein, auf der insbesondere eine lichtabsorbierende Beschichtung (8) vorliegen kann. Alternativ kann der Absorber (5') aus einem Blech, insbesondere einem Metallblech gefertigt sein. Auch in diesem Fall umfasst der Absorber (5') bevorzugt eine lichtabsorbierende Beschichtung (8). Das Metallblech kann auch einem unedlen Metall, bevorzugt aus einem Edelmetall bestehen.

Figur 8 zeigt einen Permeations-Solarkollektor (1) in analoger Ausbildung zu dem Solarkollektor von Figur 1. Bei dem Solarkollektor gemäß Figur 8 sind allerdings Absorber (5') mit schlitzförmigen Mikro-Öffnungen vorgesehen, die insbesondere aus einem Metallblech bzw. einem Blechkörper bestehen können. Figur 9 zeigt eine teilweise geöffnete Detailansicht des Solarkollektors von Figur 8, in der die transparente Abdeckung (4) lediglich angedeutet ist und einer der Absorber (5') Blechkörper ausgeblendet bzw. entfernt ist.

Figur 7 und 9 zeigen ferner eine weitere bevorzugte Ausbildung einer Vertikalstütze (10'), die eine Säulen- oder Stabform aufweist. Die Vertikalstütze (10') ist - wie in dem oben erläuterten Beispiel - einerseits mit dem Gestell (6) eines Permeations-Solarkollektors (1, 1') und andererseits mit mindestens einem Firstträger (11, 12, 35) verbindbar. Die rückseitige Gehäusewandung (15) ist in dem Beispiel von Figur 9 ebenfalls auf einen dritten Firstträger (Rückwandungs-Firstträger 35) aufgelegt.

Abwandlungen der Erfindung sind in verschiedener Weise möglich. Insbesondere können alle genannten Aspekte sowie alle zu den Ausführungsbeispielen gezeigten oder beanspruchten Merkmale in beliebiger Weise miteinander kombiniert, vertauscht oder weggelassen werden.

Das Gestell (6) des Solarkollektors (1) umfasst bevorzugt die ein oder mehreren Längsträger (13, 14), die ein oder mehreren Fristträger (11, 12, 35), die ein oder mehreren Stirnabdeckungen (16, 17), etwaig einen oder mehrere Querträger (21), eine oder mehrere Vertikalstützen (10, 10') sowie bevorzugt die eine oder mehrere seitliche Wannen (20) und die Seitenblenden (18).

Das Gestell (6) bzw. dessen Bestandteile werden bevorzugt aus Metallwerkstoffen, insbesondere Metallblechen und Metallrohren gefertigt. In einer bevorzugten Ausführungsvariante ist das Gestell (6) überwiegend oder vollständig aus Edelstahl, d.h. aus rostfreien Stahlwerkstoffen gebildet.

Eine Mikro-Perforation hat bevorzugt einen Durchmesser von weniger als 10 Millimeter, insbesondere von gleich oder weniger als 1 Millimeter. Bevorzugt ist ein Durchmesser zwischen 0,1 Millimeter und 1 Millimeter.

Verschiedene Weiterbildungen der oben erläuterten Gegenstände haben besondere Relevanz und sind jeweils für sich sowie in Kombination verwendbar, um einen Beitrag zur offenbarungsgemäßen Aufgabe zu leisten. Einige dieser Weiterbildungen sind nachfolgend benannt.

Eine bevorzugte Ausbildung des Absorbers (5) sieht vor, dass der Absorber (5) aus einer flächig gasdurchlässigen Metallfolie (7), insbesondere aus einer Edelstahlfolie, gebildet ist und eine lichtabsorbierende Beschichtung (8) aufweist.

Eine erste Weiterbildung hierzu sieht vor, dass die Metallfolie (7) kalottiert ist.

Eine andere Weiterbildung sieht vor, dass die lichtabsorbierende Beschichtung (8) eine Chrom-Oxid Beschichtung ist.

Eine andere Weiterbildung sieht vor, dass der Absorber (5) aus einem Folienzuschnitt gebildet ist und insbesondere
- mindestens eine Makro-Sicke und/oder
- mindestens eine Randversteifung und/oder
- mindestens einen Randfalz aufweist.

Eine andere Weiterbildung sieht vor, dass die Metallfolie (7) und somit der Absorber (5) eine Perforation aufweist. Die Perforation kann eine beliebige Form und Verteilung von Mikro-Öffnungen vorsehen. Insbesondere können flächig verteilte Schlitze und/oder Löcher vorgesehen sein.

Eine bevorzugte Ausführung des Permeations-Solarkollektors (1) ist dazu ausgebildet, ein Gas mit Sonnenstrahlung (L) zu erwärmen. Der Solarkollektor (1) weist einen äußeren gasführenden Strömungskanal (2) und einen inneren gasführenden Strömungskanal (3) auf. Der äußere Strömungskanal (2) ist auf der Einstrahlungsseite (A) durch eine dünnschichtige und gasdurchlässige transparente Abdeckung (4) und nach innen hin durch einen dünnschichtigen und gasdurchlässigen Absorber (5) begrenzt. Der innere Strömungskanal (3) ist auf der Einstrahlungsseite (A) durch den Absorber (5) begrenzt.

Eine bevorzugte Weiterbildung des Permeations-Solarkollektors (1) sieht vor, dass der Absorber (5) eine lichtabsorbierende Beschichtung (8) aufweist und aus einer gasdurchlässigen Metallfolie (7) gebildet ist, insbesondere aus einer Edelstahlfolie.

Eine alternative Weiterbildung des Permeations-Solarkollektors (1) sieht vor, dass der Absorber (5) durch ein flächig gasdurchlässiges Metallblech gebildet ist, wobei das Metallblech bevorzugt ebenfalls eine lichtabsorbierende Beschichtung (8), insbesondere eine Chrom-Oxid Beschichtung aufweist.

Eine Weiterbildung, die mit allen vorgenannten Weiterbildungen kombinierbar oder für sich allein nutzbar ist, sieht vor, dass der Permeations-Solarkollektor (1) ein Fahrgestell (23) aufweist.

Eine andere Weiterbildung, die mit allen vorgenannten Weiterbildungen kombinierbar oder für sich allein nutzbar ist, sieht vor, dass der Permeations-Solarkollektor (1) mindestens einen Firstträger (11, 12) aufweist, auf dem der Absorber (5) oder die transparente Abdeckung (4) stützend auflegbar ist, wobei der Firstträger (11, 12) durch ein Rohr oder eine Stange gebildet ist.

Eine andere Weiterbildung sieht vor, dass der Permeations-Solarkollektor (1) dazu ausgebildet ist, einen Unterdruck (P-) gegenüber dem äußeren Atmosphärendruck an einem Stirnende des inneren Strömungskanals (3) zu erzeugen, insbesondere durch eine an dem Solarkollektor (1) angeordnete Saugvorrichtung (30). Der Solarkollektor (1) kann zu diesem Zweck eine Saugvorrichtung (20) aufweisen oder zur Verbindung mit einer Saugvorrichtung (30) ausgebildet sein.

Eine andere Weiterbildung sieht vor, dass die rückseitige Wandung (15) des inneren Strömungskanals (3) mindestens eine gegenüber der Horizontalebene geneigte Fläche (32, 33) aufweist, die eine Ablaufrichtung für eine Flüssigkeit im inneren Strömungskanal (3) definiert, insbesondere zu einem Flüssigkeitsauslass hin.

Eine andere Weiterbildung sieht vor, dass die transparente Abdeckung (4) durch eine Folie gebildet ist, die auf einem ersten Firstträger (11) aufgelegt und an den Längsseiten mit einem Gestell (6) des Solarkollektors (1) verbunden ist.

Eine andere Weiterbildung sieht vor, dass die transparente Abdeckung (4) die Form eines Satteldachs, eines Mansarddachs oder eines Tonnendachs aufweist.

### BEZUGSZEICHENLISTE

- 1: Solarkollektor / Permeations-Solarkollektor
- 1': Solarkollektor / Permeations-Solarkollektor
- 2: Äußerer Strömungskanal / Erwärmungskanal
- 3: Innerer Strömungskanal / Sammelkanal
- 4: Transparente Abdeckung / ETFE Folie
- 4a: Seitlicher Endbereich
- 5: Absorber
- 5': Absorber
- 6: Gestell / Gehäuse
- 7: Metallfolie / Edelstahlfolie
- 8: Lichtabsorbierende Beschichtung
- 9: Mikro-Öffnung / Pore / Perforation
- 10: Vertikalstütze, kleiderbügelförmig
- 10': Vertikalstütze, säulenförmig
- 11: Erster Firstträger / Abdeckungs-Firstträger / Rohr / Stange
- 12: Zweiter Firstträger / Absorber-Firstträger / Rohr / Stange
- 13: Längsträger / Rohr /Stange
- 14: Längsträger / Rohr /Stange
- 15: Gehäusewandung, rückseitig
- 16: Stirnabdeckung
- 17: Stirnabdeckung
- 18: Seitenblende
- 19: Kompressibler Wulst
- 20: Wanne
- 21: Querträger
- 22: Stützleiste
- 23: Fahrgestell
- 24: Fahrachse / nicht lenkbare Achse
- 25: Lenkachse
- 26: Lagerbock
- 27: Reinigungsvorrichtung
- 28: Düse
- 29: Gelenk
- 30: Saugvorrichtung
- 31: Ausleger
- 32: geneigte Fläche
- 33: geneigte Fläche
- 34: Aufgleitfläche
- 35: Dritter Firstträger / Rückwandungs-Firstträger
- 36: Schlitz / Mikro-Öffnung
- 37: Schlitz / Mikro-Öffnung
- 38: Schlitz / Mikro-Öffnung
- 39: Erste Linie
- 40: Zweite Linie
- A: Einstrahlungsseite
- B: Rückseite / von Einstrahlung abgewandte Seite
- L: Lichtstrahl
- P-: Drucksenke / Unterdruckniveau
- P+: Atmosphärendruck
- S1: Erste Permeations-Strömung
- S2: Zweite Permeations-Strömung
- S3: Kanal-Strömung
- S4: Rückseitige Zuströmung
- X: Längsachse / Längsrichtung
- Y: Querachse / Querrichtung
- Z: Normalachse / Normalrichtung / Vertikalrichtung

## Patentansprüche

1. Permeations-Solarkollektor zur Erwärmung eines Gases mit Sonnenstrahlung (L), wobei der Solarkollektor (1) einen äußeren gasführenden Strömungskanal (2) und einen inneren gasführenden Strömungskanal (3) aufweist, wobei der äußere Strömungskanal (2) auf der Einstrahlungsseite (A) durch eine dünnschichtige und gasdurchlässige transparente Abdeckung (4) und nach innen hin durch einen dünnschichtigen und gasdurchlässigen Absorber (5) begrenzt ist, und wobei der innere Strömungskanal (3) auf der Einstrahlungsseite (A) durch den Absorber (5) begrenzt ist, **dadurch gekennzeichnet, dass**
- der Permeations-Solarkollektor (1) mindestens einen Firstträger (11, 12) aufweist, auf dem der Absorber (5) oder die transparente Abdeckung (4) stützend auflegbar ist, wobei der Firstträger (11, 12) durch ein Rohr oder eine Stange gebildet ist.

2. Permeations-Solarkollektor nach Anspruch 1, wobei der Permeations-Solarkollektor (1) ein Fahrgestell (23) aufweist.

3. Permeations-Solarkollektor nach Anspruch 1 oder 2,
**dadurch gekennzeichnet , dass**
- die transparente Abdeckung (4) durch eine für UV-Licht durchlässige Kunststoff-Folie gebildet ist, insbesondere durch eine ETFE-Folie, UND/ODER dass
- der Absorber (5) eine lichtabsorbierende Beschichtung (8) aufweist und aus einer gasdurchlässigen Metallfolie (7) gebildet ist, insbesondere aus einer Edelstahlfolie.

4. Permeations-Solarkollektor nach einem der Ansprüche 1, 2 oder 3, wobei der innere Strömungskanal (3) auf der Rückseite (B) durch eine gasdurchlässige Gehäusewandung (15) begrenzt ist, insbesondere durch eine perforierte Platte oder ein perforiertes Blech.

5. Permeations-Solarkollektor nach einem der vorhergehenden Ansprüche, wobei in dem inneren Strömungskanal (3) ein Unterdruck (P-) gegenüber der Außenatmosphäre erzeugbar ist, sodass ein zu erwärmendes Gas von der Außenatmosphäre her in einer ersten Permeations-Strömung (S1) durch die transparente Abdeckung (4) in den äußeren Strömungskanal (2) und weiter in einer zweiten Permeations-Strömung (S2) durch den Absorber (5) in den inneren Strömungskanal (3) saugbar ist, und wobei insbesondere eine Gasdurchlässigkeit der rückseitigen Wandung des inneren Strömungskanals (3) geringer ist als die Gasdurchlässigkeit des Absorbers (5) und der transparenten Abdeckung (4), sodass eine rückseitige Zuströmung (S4) von Gas geringer ist als die Permeations-Strömungen (S1, S2) .

6. Solarkollektor nach einem der vorhergehenden Ansprüche, wobei der Solarkollektor (1) mindestens eine Reinigungsvorrichtung (27) aufweist, die dazu ausgebildet sind, ein Reinigungsmittel oder Desinfektionsmittel in den inneren Strömungskanal (3) und/oder den äußeren Strömungskanal (2) beizugeben.

7. Permeations-Solarkollektor nach einem der vorhergehenden Ansprüche, wobei die rückseitige Wandung (15) des inneren Strömungskanals (3) mindestens eine gegenüber der Horizontalebene geneigte Fläche (32, 33) aufweist, die eine Ablaufrichtung für eine Flüssigkeit im inneren Strömungskanal (3) definiert, insbesondere zu einem Flüssigkeitsauslass hin.

8. Permeations-Solarkollektor nach einem der vorhergehenden Ansprüche, wobei der Solarkollektor (1) an zumindest einer Stirnseite eine die Windeinwirkung reduzierende Aufgleitfläche (34) aufweist, die insbesondere durch ein Formblech gebildet ist.

9. Permeations-Solarkollektor nach einem der vorhergehenden Ansprüche, wobei der Solarkollektor (1) mindestens eine Vertikalstütze aufweist, die von der rückseitigen Wandung (15) aus zur Einstrahlungsseite (A) hin absteht und einen ersten Firstträger (11) stützt, auf dem die transparente Abdeckung (4) aufliegt, und/oder einen zweiten Firstträger (12) stützt, auf dem der Absorber (5) aufliegt, und/oder einen dritten Firstträger stützt, auf dem die rückseitige Wandung (15) aufliegt.

10. Permeations-Solarkollektor nach einem der vorhergehenden Ansprüche, wobei die transparente Abdeckung (4) durch ein kompressibles oder elastisches Element gespannt ist, insbesondere durch einen kompressiblen Wulst (19), der einen Teil der transparenten Abdeckung (4) bogenförmig in einer Wanne (20) führt.

11. Permeations-Solarkollektor nach einem der vorhergehenden Ansprüche, wobei der Absorber (5) als in sich steifer und sich selbst stützender Folienkörper oder Blechkörper gebildet ist.

12. Permeations-Solarkollektor nach einem der vorhergehenden Ansprüche, wobei der Solarkollektor (1) über mindestens ein Gelenk (29) mit einem benachbarten Solarkollektor (1) verbunden ist.

13. Mobile Solarkollektor-Vorrichtung, umfassend einen ersten Permeations-Solarkollektor (1) nach einem der vorhergehenden Ansprüche mit einem Fahrgestell (23) und mindestens einen weiteren Permeations-Solarkollektor (1'), wobei der weitere Solarkollektor (1') mit dem ersten Permeations-Solarkollektor (1) und/oder dem Fahrgestell (23) beweglich verbunden ist.

14. Mobile Solarkollektor-Vorrichtung nach dem vorhergehenden Anspruch, wobei der mindestens eine weitere Solarkollektor (1') schwenkbar angeordnet ist, insbesondere derart, dass der weitere Solarkollektor (1') zwischen einer Transportstellung mit im Wesentlichen vertikal ausgerichteter rückseitiger Wandung (15) und einer Einsatzstellung mit im Wesentlichen horizontal ausgerichteter rückseitiger Wandung (15) bewegbar ist.

15. Absorber für einen Permeations-Solarkollektor (1) nach einem der vorhergehenden Ansprüche, **dadurch gekennzeichnet, dass** der Absorber (5) eine lichtabsorbierende Beschichtung (8) aufweist und aus einer gasdurchlässigen Metallfolie (7) gebildet ist, insbesondere aus einer Edelstahlfolie.

## Claims

1. Permeation solar collector for heating a gas with solar radiation (L), wherein the solar collector (1) comprises an outer gas-conducting flow channel (2) and an inner gas-conducting flow channel (3), wherein the outer flow channel (2) is delimited on the irradiation side (A) by a thin-layered and gas-permeable transparent cover (4) and is delimited inwardly by a thin-layered and gas-permeable absorber (5), and wherein the inner flow channel (3) is delimited on the irradiation side (A) by the absorber (5), **characterized in that**
- the permeation solar collector (1) comprises at least one ridge carrier (11, 12), on which the absorber (5) or the transparent cover (4) is able to be placed in a supporting manner, wherein the ridge carrier (11, 12) is formed by a tube or a rod.

2. Permeation solar collector according to Claim 1, wherein the permeation solar collector (1) comprises a chassis (23).

3. Permeation solar collector according to Claim 1 or 2, **characterized in that**,
- the transparent cover (4) is formed by a plastic film that is transmissive to UV light, in particular by an ETFE film,
and/or **in that**
- the absorber (5) comprises a light-absorbing coating (8) and is formed from a gas-permeable metal film (7), in particular from a high-grade steel film.

4. Permeation solar collector according to any of Claims 1, 2 or 3, wherein the inner flow channel (3) is delimited on the rear side (B) by a gas-permeable housing wall (15), in particular by a perforated plate or a perforated metal sheet.

5. Permeation solar collector according to any of the preceding claims, wherein a reduced pressure (P-) relative to the external atmosphere is able to be generated in the inner flow channel (3), such that a gas to be heated is able to be sucked from the external atmosphere in a first permeation flow (S1) through the transparent cover (4) into the outer flow channel (2) and further in a second permeation flow (S2) through the absorber (5) into the inner flow channel (3), and wherein in particular a gas permeability of the rear-side wall of the inner flow channel (3) is lower than the gas permeability of the absorber (5) and of the transparent cover (4), such that a rear-side inflow (S4) of gas is less than the permeation flows (S1, S2).

6. Solar collector according to any of the preceding claims, wherein the solar collector (1) comprises at least one cleaning device (27) configured to add a cleaning agent or disinfectant into the inner flow channel (3) and/or the outer flow channel (2).

7. Permeation solar collector according to any of the preceding claims, wherein the rear-side wall (15) of the inner flow channel (3) has at least one surface (32, 33) which is inclined relative to the horizontal plane and which defines an outflow direction for a liquid in the inner flow channel (3), in particular towards a liquid outlet.

8. Permeation solar collector according to any of the preceding claims, wherein the solar collector (1) comprises at at least one end side a sliding surface (34) which reduces the action of wind and which is formed in particular by a shaped metal sheet.

9. Permeation solar collector according to any of the preceding claims, wherein the solar collector (1) comprises at least one vertical support which projects from the rear-side wall (15) towards the irradiation side (A) and supports a first ridge carrier (11), on which the transparent cover (4) bears, and/or supports a second ridge carrier (12), on which the absorber (5) bears, and/or supports a third ridge carrier, on which the rear-side wall (15) bears.

10. Permeation solar collector according to any of the preceding claims, wherein the transparent cover (4) is tensioned by a compressible or elastic element, in particular by a compressible bead (19) which guides a part of the transparent cover (4) arcuately in a trough (20).

11. Permeation solar collector according to any of the preceding claims, wherein the absorber (5) is formed as an inherently stiff and self-supporting film body or sheet metal body.

12. Permeation solar collector according to any of the preceding claims, wherein the solar collector (1) is connected to an adjacent solar collector (1) via at least one joint (29).

13. Mobile solar collector device, comprising a first permeation solar collector (1) according to any of the preceding claims having a chassis (23), and at least one further permeation solar collector (1'), wherein the further solar collector (1') is movably connected to the first permeation solar collector (1) and/or the chassis (23).

14. Mobile solar collector device according to the preceding claim, wherein the at least one further solar collector (1') is arranged pivotably, in particular in such a way that the further solar collector (1') is movable between a transport position with a substantially vertically oriented rear-side wall (15) and a use position with a substantially horizontally oriented rear-side wall (15) .

15. Absorber for a permeation solar collector (1) according to any of the preceding claims, **characterized in that** the absorber (5) comprises a light-absorbing coating (8) and is formed from a gas-permeable metal film (7), in particular from a high-grade steel film.

## Revendications

1. Capteur solaire à perméation destiné à chauffer un gaz avec un rayonnement solaire (L), le capteur solaire (1) comportant un conduit d'écoulement extérieur (2) de transport de gaz et un conduit d'écoulement intérieur (3) de transport de gaz, le conduit d'écoulement extérieur (2) étant délimité du côté rayonnement (A) par un couvercle transparent (4) à couche mince et perméable au gaz et vers l'intérieur par un absorbeur (5) à couche mince et perméable au gaz, et le conduit d'écoulement intérieur (3) étant délimité du côté rayonnement (A) par l'absorbeur (5), **caractérisé en ce que**
- le capteur solaire à perméation (1) comporte au moins un support de faîtage (11, 12) sur lequel l'absorbeur (5) ou le couvercle transparent (4) peut être placé en appui, le support de faîtage (11, 12) étant formé par un tube ou une tige.

2. Capteur solaire à perméation selon la revendication 1, le capteur solaire à perméation (1) comportant un châssis de roulement (23).

3. Capteur solaire à perméation selon la revendication 1 ou 2,
**caractérisé en ce que**
- le couvercle transparent (4) est formé par un film de matière synthétique perméable à la lumière UV, notamment un film en ETFE,
ET/OU
- l'absorbeur (5) comporte un revêtement photo-absorbant (8) et est formé à partir d'un film métallique (7) perméable au gaz, notamment d'un film d'acier fin.

4. Capteur solaire à perméation selon l'une des revendications 1, 2 ou 3, le conduit d'écoulement intérieur (3) étant délimité sur le côté arrière (B) par une paroi de boîtier (15) perméable au gaz, notamment par une plaque perforée ou une tôle perforée.

5. Capteur solaire à perméation selon l'une des revendications précédentes, une pression négative (P-) par rapport à l'atmosphère extérieure pouvant être générée dans le conduit d'écoulement intérieur (3) de sorte qu'un gaz à chauffer provenant de l'atmosphère extérieure puisse être aspiré dans un premier écoulement de perméation (S1) à travers le couvercle transparent (4) jusque dans le conduit d'écoulement extérieur (2) puis dans un deuxième écoulement de perméation (S2) à travers l'absorbeur (5) jusque dans le conduit d'écoulement intérieur (3), et en particulier une perméabilité au gaz de la paroi arrière du conduit d'écoulement intérieur (3) étant inférieure à la perméabilité au gaz de l'absorbeur (5) et du couvercle transparent (4) de sorte qu'un afflux arrière (S4) de gaz soit inférieur aux écoulements de perméation (S1, S2).

6. Capteur solaire selon l'une des revendications précédentes, le capteur solaire (1) comportant au moins un dispositif de nettoyage (27) qui est conçu pour ajouter un agent de nettoyage ou un agent désinfectant dans le conduit d'écoulement intérieur (3) et/ou le conduit d'écoulement extérieur (2).

7. Capteur solaire à perméation selon l'une des revendications précédentes, la paroi arrière (15) du conduit d'écoulement intérieur (3) comportant au moins une surface (32, 33) qui est inclinée par rapport au plan horizontal et qui définit une direction de drainage d'un liquide dans le conduit d'écoulement intérieur (3), notamment vers une sortie de liquide.

8. Capteur solaire à perméation selon l'une des revendications précédentes, le capteur solaire (1) comportant, sur au moins un côté frontal, une surface de glissement (34) qui atténue l'effet du vent et qui est formée notamment par une tôle profilée.

9. Capteur solaire à perméation selon l'une des revendications précédentes, le capteur solaire (1) comportant au moins un support vertical qui fait saillie de la paroi arrière (15) vers le côté rayonnement (A) et qui supporte un premier support de faîtage (11) sur lequel repose le couvercle transparent (4), et/ ou une deuxième support de faîtage (12) sur lequel repose l'absorbeur (5), et/ou qui supporte un troisième support de faîtage sur lequel repose la paroi arrière (15).

10. Capteur solaire à perméation selon l'une des revendications précédentes, le couvercle transparent (4) étant serré par un élément compressible ou élastique, notamment par un cordon compressible (19), qui guide une partie du couvercle transparent (4) en forme d'arc dans une cuve (20).

11. Capteur solaire à perméation selon l'une des revendications précédentes, l'absorbeur (5) étant formé comme un corps pelliculaire ou un corps en tôle intrinsèquement rigide et autoportant.

12. Capteur solaire à perméation selon l'une des revendications précédentes, le capteur solaire (1) étant relié à un capteur solaire adjacent (1) par le biais d'au moins une articulation (29).

13. Dispositif mobile à capteurs solaires, comprenant un premier capteur solaire à perméation (1) selon l'une des revendications précédentes pourvu d'un châssis de roulement (23) et au moins un autre capteur solaire à perméation (1'), l'autre capteur solaire (1') étant relié de manière mobile au premier capteur solaire à perméation (1) et/ou au châssis de roulement (23).

14. Dispositif mobile à capteurs solaires selon la revendication précédente, l'au moins un autre capteur solaire (1') étant disposé de manière pivotante, notamment de sorte que l'autre capteur solaire (1') puisse être déplacé entre une position de transport, dans laquelle la paroi arrière (15) est orientée sensiblement verticalement, et une position d'utilisation dans laquelle la paroi arrière (15) est orientée sensiblement horizontalement.

15. Absorbeur destiné à un capteur solaire à perméation (1) selon l'une des revendications précédentes, **caractérisé en ce que** l'absorbeur (5) comporte un revêtement photo-absorbant (8) et est formé à partir d'un film métallique (7) perméable au gaz, notamment d'un film d'acier fin.
